# EUROPEAN PATENT APPLICATION

(11) **EP 4 550 887 A1**
(43) Date of publication of application: **07.05.2025**
(21) Application number: 23834808.0
(22) Date of filing: 03.07.2023
(51) Int. Cl.: H04W 36/28

(54) **COMMUNICATION METHOD AND APPARATUS, DEVICE, AND COMPUTER STORAGE MEDIUM**

(30) Priority: 04.07.2022 CN 202210786568
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: XIE, Fang, Beijing 100053 (CN)
(74) Representative: Novagraaf Technologies
(86) International application number: PCT/CN2023/105538
(87) International publication number: WO 2024/008041

(57) **Abstract**

The embodiments of the present application disclose a communication method and apparatus, a device and a computer storage medium. The method includes: a terminal reporting first information related to the activation or deactivation of a primary secondary cell (PSCell) or of a secondary cell group (SCG), herein the first information includes at least one of the following: a cell identifier of a PSCell; first indication information indicating whether the PSCell or the SCG is deactivated; second indication information indicating whether the PSCell or the SCG has been deactivated; PSCell or SCG activation and/or deactivation duration information; the activation and/or deactivation state of other secondary cells (SCells) in the SCG other than the PSCell; duration information corresponding to the states of the SCells other than the PSCell in the SCG; network element information indicating SCG activation or deactivation; and whether the configuration of the network side allows the terminal to apply for the activation or deactivation of the SCG.

## Description

### CROSS-REFERENCE TO RELATED APPLICATION

This application is filed based on and claims priority to Chinese patent application No. 202210786568.5 filed on July 4, 2022, the contents of which are hereby incorporated by reference in its entirety.

### TECHNICAL FIELD

The disclosure relates to the technical field of communications, and in particular to a communication method, apparatus and device, and a computer storage medium.

### BACKGROUND

Both the network side and the user equipment (UE) may trigger activation and deactivation of a secondary cell group (SCG)/primary secondary cell (PSCell). For the arrival of downlink services, the network side has more information or predictive capabilities, and if the UE is not sensitive to power consumption at this time, the activation and deactivation of the PSCell/SCG may be triggered by the network side node. For uplink services, especially for the arrival or end of a large number of sudden uplink services, or if the UE is sensitive to power consumption (for example, when the battery level of the UE is low), it is more reasonable for the UE to trigger the activation and deactivation of the secondary node (SN)/PSCell/SCG.

At present, the reporting of UE mobility history information in dual connection scenarios does not involve information related to the activation/deactivation of the PSCell or the SCG. That is, the network side node cannot predict activated/deactivated state of the PSCell or the SCG of the UE in dual connection scenarios. Therefore, the network side node cannot better optimize a handover strategy for the UE or provide customized resource configuration for the UE.

### SUMMARY

The embodiments of the disclosure provide a communication method, apparatus and device, and a computer storage medium.

The technical solutions in the embodiments of the disclosure are implemented as follows.

According to a first aspect, an embodiment of the disclosure provides a communication method, including the following operation.

A terminal reports first information related to activation or deactivation of a primary secondary cell (PSCell) or a secondary cell group (SCG), herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of a network device allows the terminal to request the activation or deactivation of the SCG.

In some optional embodiments of the disclosure, the method further includes the following operation: the terminal records the first information.

In some optional embodiments of the disclosure, the method further includes the following operations: the terminal receives first configuration information transmitted by the network device, herein the first configuration information is configured to configure or request the terminal to record or report the first information; or
The terminal records the first information according to a predefined protocol.

In some optional embodiments of the disclosure, the network device is one of: a network management device, a trace collection entity (TCE), or a base station.

In some optional embodiments of the disclosure, the operation that the terminal reports the first information related to the activation or deactivation of the PSCell or the SCG includes the following operations: the terminal receives a first request transmitted by the network device, and transmits the first information to the network device based on the first request; or
The terminal actively transmits the first information to the network device; or
The terminal transmits second information to the network device, receives a second request transmitted by the network device, and transmits the first information to the network device based on the second request, herein the second information is configured to notify that the first information has been recorded.

In some optional embodiments of the disclosure, the method further includes the following operation: the terminal receives a first indication transmitted by the network device, herein the first indication is configured to indicate the terminal to perform a base station handover or a cell handover.

Herein for the terminal for which the duration information corresponding to the activated state of the SCG meets a first preset condition, the first indication is configured to indicate the terminal to switch to a base station or a cell that has a load less than a first threshold and supports dual connection; and/or

For the terminal for which the duration information corresponding to the activated state of the SCG does not meet the first preset condition, the first indication is configured to indicate the terminal to switch to a cell in which a communication quality is higher than a second threshold.

In some optional embodiments of the disclosure, the method further includes the following operation: the terminal receives second configuration information transmitted by the network device; herein the second configuration information includes at least one of:
A state of the PSCell or the SCG;
Duration information corresponding to the state of the PSCell or the SCG;
A state of the at least one SCell in the SCG, other than the PSCell;
Duration information corresponding to the state of the at least one SCell in the SCG, other than the PSCell; or
Information of whether the configuration of the network device allows the terminal to request the activation or deactivation of the SCG.

According to a second aspect, an embodiment of the disclosure further provides a communication method, including the following operation.

A network device receives first information related to activation or deactivation of a primary secondary cell (PSCell) or a secondary cell group (SCG) reported by a terminal, herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of the network device allows the terminal to request the activation or deactivation of the SCG.

In some optional embodiments of the disclosure, the network device is one of: a network management device, a trace collection entity (TCE), or a base station.

In some optional embodiments of the disclosure, the method further includes the following operation: the network device transmits first configuration information to the terminal, herein the first configuration information is configured to configure or request the terminal to record or report the first information.

In some optional embodiments of the disclosure, before the network device receives the first information related to the activation or deactivation of the PSCell or the SCG reported by the terminal, the method further includes the following operations.

The network device transmits a first request to the terminal, herein the first request is configured to request the first information; or
The network device receives second information transmitted by the terminal, herein the second information is configured to notify that the terminal has recorded the first information; and transmits a second request to the terminal, herein the second request is configured to request the first information.

In some optional embodiments of the disclosure, the method further includes the following operation: the network device optimizes a handover strategy of the terminal and/or a configuration related to the PSCell or the SCG based on the first information.

In some optional embodiments of the disclosure, the method further includes the following operation: the network device transmits a first indication to the terminal based on the handover strategy, herein the first indication is configured to indicate the terminal to perform a base station handover or a cell handover.

Herein for the terminal for which the duration information corresponding to the activated state of the SCG meets a first preset condition, the first indication is configured to indicate the terminal to switch to a base station or a cell that has a load less than a first threshold and supports dual connection; and/or

For the terminal for which the duration information corresponding to the activated state of the SCG does not meet the first preset condition, the first indication is configured to indicate the terminal to switch to a cell in which a communication quality is higher than a second threshold.

In some optional embodiments of the disclosure, the method further includes the following operation: the network device transmits second configuration information to the terminal based on the configuration related to the PSCell or the SCG; herein the second configuration information includes at least one of:
A state of the PSCell or the SCG;
Duration information corresponding to the state of the PSCell or the SCG;
A state of the at least one SCell in the SCG, other than the PSCell;
Duration information corresponding to the state of the at least one SCell in the SCG, other than the PSCell; or
Whether the configuration of the network device allows the terminal to request the activation or deactivation of the SCG.

According to a third aspect, an embodiment of the disclosure further provides a communication method, including the following operation.

A first network device transmits first information related to activation or deactivation of a primary secondary cell (PSCell) or a secondary cell group (SCG) of a terminal to a second network device, herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of a network device allows the terminal to request the activation or deactivation of the SCG.

In some optional embodiments of the disclosure, the operation that the first network device transmits the first information related to the activation or deactivation of the PSCell or the SCG of the terminal to the second network device includes the following operation: the first network device transmits a handover request message to the second network device, herein the handover request message includes the first information.

According to a fourth aspect, an embodiment of the disclosure further provides a communication apparatus, applied in a terminal. The apparatus includes a first communication unit configured to report first information related to activation or deactivation of a primary secondary cell (PSCell) or a secondary cell group (SCG), and the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of a network device allows the terminal to request the activation or deactivation of the SCG.

According to a fifth aspect, an embodiment of the disclosure further provides a communication apparatus, applied in a network device. The apparatus includes a second communication unit configured to receive first information related to activation or deactivation of a primary secondary cell (PSCell) or a secondary cell group (SCG) reported by a terminal, and the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of the network device allows the terminal to request the activation or deactivation of the SCG.

According to a sixth aspect, an embodiment of the disclosure further provides a communication apparatus, including a third communication unit, configured to transmit first information related to activation or deactivation of a primary secondary cell (PSCell) or a secondary cell group (SCG) of a terminal to a second network device, herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of a network device allows the terminal to request the activation or deactivation of the SCG.

According to a seventh aspect, an embodiment of the disclosure further provides a computer-readable storage medium, having stored thereon a computer program, and the computer program, when executed by a processor, implements the operations of the communication method in the first aspect, the second aspect, or the third aspect of the embodiments of the disclosure.

According to an eighth aspect, an embodiment of the disclosure further provides a communication device, including a memory, a processor, and a computer program stored in the memory and executable by the processor. The processor, when executing the computer program, implements the operations of the communication method in the first aspect, the second aspect, or the third aspect of the embodiments of the disclosure.

The embodiments of the disclosure provide a communication method, apparatus and device, and a computer storage medium. The method includes that, a terminal reports first information related to activation or deactivation of a PSCell or an SCG, herein the first information includes at least one of: a cell identity of the PSCell; first indication information of whether the PSCell or the SCG is deactivated; second indication information of whether the PSCell or the SCG has ever been deactivated; duration information for the activation and/or deactivation of the PSCell or the SCG; an activated and/or deactivated state of at least one SCell in the SCG, other than the PSCell; duration information corresponding to the state of the at least one SCell in the SCG, other than the PSCell; network element information for indicating the activation or deactivation of the SCG; or whether a configuration of a network device allows the terminal to request the activation or deactivation of the SCG. According to the technical solutions in the embodiments of the disclosure, the first information related to the activation or deactivation of the PSCell or the SCG is reported by the terminal, which helps the network side know the dual connection situation of the terminal, thereby facilitating the network side to optimize the handover strategy and related configuration.

### BRIEF DESCRIPTION OF THE DRAWINGS

FIG. 1 is a first schematic flowchart of a communication method according to an embodiment of the disclosure;
FIG. 2 is a second schematic flowchart of a communication method according to an embodiment of the disclosure;
FIG. 3 is a first schematic diagram of a composition structure of a communication apparatus according to an embodiment of the disclosure;
FIG. 4 is a second schematic diagram of a composition structure of a communication apparatus according to an embodiment of the disclosure; and
FIG. 5 is a schematic diagram of a hardware composition structure of a communication device according to an embodiment of the disclosure.

### DETAILED DESCRIPTION

The disclosure is elaborated in detail below with reference to the drawings and specific embodiments.

The technical solutions in the embodiments of the disclosure may be applied to various communication systems, such as global system of mobile communication (GSM) systems, long term evolution (LTE) systems, or 5th-generation (5G) systems, etc. Optionally, a 5G system or 5G network may also be referred to as a new radio (NR) system or NR network.

Exemplarily, a communication system to which an embodiment of the disclosure is applied may include a network device and a terminal device (which may also be referred to as a terminal, a communication terminal, etc.); and the network device may be a device that communicates with the terminal device. Herein the network device may provide communication coverage within a certain area, and may communicate with a terminal located within the area. Optionally, the network device may be a base station in various communication systems, such as an evolutional node B (eNB) in an LTE system, or the next generation node B (gNB) in a 5G system or NR system.

It should be understood that a device with communication functions in the network/system in the embodiments of the disclosure may be referred to as a communication device. The communication device may include a network device and a terminal with communication functions, and the network device and the terminal device may be specific devices described above, and will not be repeated herein. The communication device may further include other devices in the communication systems, such as a network controller, a mobile management entity, and other network entities, which are not limited in the embodiments of the disclosure.

It should be understood that terms "system" and "network" are often used interchangeably in the disclosure. A term "and/or" in the disclosure is only an association relationship describing associated objects, and indicates that there may be three relationships. For example, A and/or B may indicate three cases: existence of A alone, existence of A and B simultaneously, and existence of B alone. Furthermore, a character "/" in the disclosure generally indicates that associated objects before and after are in an "or" relationship.

Terms "first", "second" and the like in the specification and claims of the disclosure are used to distinguish similar objects, and do not necessarily describe a particular order or sequence. It should be understood that the data used in this way may be interchangeable in appropriate circumstances, so that the embodiments of the disclosure described herein, for example, can be implemented in an order other than those illustrated or described herein. Furthermore, terms "include" and "have" and any variations thereof are intended to cover a non-exclusive inclusion, for example, processes, methods, systems, products, or devices including a series of operations or units are not necessarily limited to those operations or units that are clearly listed, but may include other operations or units that are not clearly listed or inherent to these processes, methods, products, or devices.

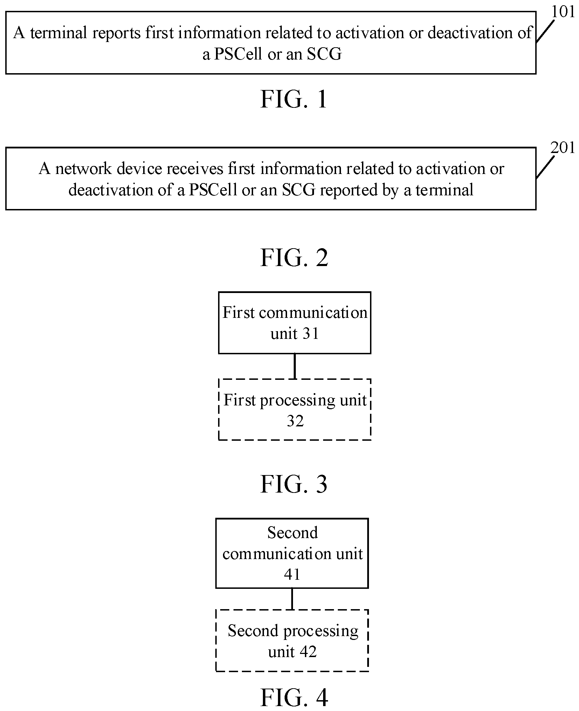

An embodiment of the disclosure provides a communication method, which is applied to a terminal. FIG. 1 is a first schematic flowchart of a communication method according to an embodiment of the disclosure. As shown in FIG. 1, the method includes the operation 101.

At operation 101, a terminal reports first information related to activation or deactivation of a primary secondary cell (PSCell) or a secondary cell group (SCG), herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of a network device allows the terminal to request the activation or deactivation of the SCG.

Optionally, the duration information for the activation and/or deactivation of the PSCell or the SCG may specifically be a specific duration corresponding to the activated state and/or deactivated state, or it may also be a duration ratio corresponding to the activated state and/or deactivated state within a certain time range.

Optionally, the duration information corresponding to the state of the at least one SCell in the SCG, other than the PSCell may specifically be a specific duration of the state (activated state and/or deactivated state) of the at least one SCell in the SCG other than the PSCell, or it may also be a duration ratio corresponding to the activated state and/or deactivated state within a certain time range.

Optionally, the network element information for indicating the activation or deactivation of the SCG may specifically be a base station, such as a master node (MN) or secondary node (SN). In other embodiments, the network element information may also be a terminal.

The embodiments of the disclosure involve dual connection scenarios. The dual connection refers to a terminal being able to connect to two base stations simultaneously, both of which may be 5G base stations or one 5G base station and one 4G base station. Among the two base stations, one is referred to as an MN, and the other is referred to as an SN. For the master node, the corresponding multiple carriers or multiple cells may be referred to as a master cell group (MCG). Correspondingly, for the secondary node, the corresponding multiple carriers or multiple cells may be referred to as a secondary cell group (SCG). For the MCG, a primary cell within the MCG is referred to as a primary cell (PCell), and a secondary cell is referred to as a secondary cell (SCell). For the SCG, a primary cell within the SCG is referred to as a primary secondary cell (PSCell), and a secondary cell is still referred to as a secondary cell (SCell).

In the embodiment, the terminal records and reports the first information related to the activation or deactivation of the PSCell or the SCG, herein the first information may also be referred to as history information or mobility history information of the terminal. In related technical solutions, the mobility history information of the terminal typically includes information of cells where the terminal has resided or connected, so as to report the mobility history information to the network side, helping the network side know historical movement trajectory of the terminal. However, the current mobility history information of the terminal does not involve any information related to the activation or deactivation of the PSCell or the SCG of the terminal. Therefore, according to the embodiment, the first information related to the activation or deactivation of the PSCell or the SCG is reported by the terminal, which helps the network side know the dual connection situation of the terminal, thereby facilitating the optimization of the handover strategy and related configuration by the network side.

In some optional embodiments of the disclosure, the method further includes that: the terminal records the first information.

In some optional embodiments of the disclosure, the method further includes the following operations. The terminal receives first configuration information transmitted by the network device, herein the first configuration information is configured to configure or request the terminal to record or report the first information. Alternatively, the terminal records the first information according to a predefined protocol.

In the embodiments, the operation that the terminal records or reports the first information mentioned above may be configured by the network device. That is, the terminal receives the first configuration information transmitted by the network device, so as to record or report the first information based on the first configuration information. In other implementations, the operation that the terminal records or reports the first information mentioned above may also be predefined by a protocol. That is, the terminal records or reports the first information according to the predefined protocol.

Optionally, the network device is one of: a network management device, a trace collection entity (TCE), or a base station.

In the embodiment, in the case where the first configuration information is configured by a network device, the network device may be a network management (network management system or network management device, etc.), a TCE, or a base station. Herein the base station may be an MN or an SN in a dual connection scenario.

In the embodiment, the terminal reports the first information to the network device. In the case where the network device is a base station, the terminal directly reports the first information to the network device. In the case where the network device is a network management device or a TCE, the terminal reports the first information to the network device through a base station, that is, the terminal first transmits the first information to the base station, and then the base station transmits the first information to the network management device or the TCE.

In some optional embodiments, the operation that the terminal reports the first information related to the activation or deactivation of the PSCell or the SCG includes the following operations. The terminal receives a first request transmitted by the network device and transmits the first information to the network device based on the first request. Alternatively, the terminal actively transmits the first information to the network device. Alternatively, the terminal transmits second information to the network device, receives a second request transmitted by the network device, and transmits the first information to the network device based on the second request. The second information is configured to notify that the first information related to the activation or deactivation of the PSCell or the SCG has been recorded.

In the embodiments, as a first implementation, the terminal reports the first information, which may specifically be requested by the network side node. That is, after receiving the first request transmitted by the network device, the terminal transmits the first information to the network device. As a second implementation, the terminal may also actively report the first information to the network device. As a third implementation, after recording the first information, the terminal may first notify the network device that the first information has been recorded, that is, the terminal transmits the second information to the network device; then, after the network device transmits the second request, i.e., upon request from the network side, the terminal reports the first information to the network device. Herein the network device may specifically be a network management device, a TCE, or a base station.

In some optional embodiments, the terminal may report the first information during processes such as handover. Herein the handover process may be, for example, a cell handover process.

In some optional embodiments, the method further includes that: the terminal receives a first indication transmitted by the network device, herein the first indication is configured to indicate the terminal to perform a base station handover or a cell handover. Herein for the terminal for which the duration information corresponding to the activated state of the SCG meets a first preset condition, the first indication is configured to indicate the terminal to switch to a base station or a cell that has a load less than a first threshold and supports dual connection; and/or for the terminal for which the duration information corresponding to the activated state of the SCG does not meet the first preset condition, the first indication is configured to indicate the terminal to switch to a cell in which a communication quality is higher than a second threshold.

In the embodiments, exemplarily, the network device (e.g., a base station) may switch a terminal that has a long duration of the activated state of the SCG, i.e., a terminal that always performs high-speed data transmission, to a relatively idle target base station that supports dual connection; and switch a terminal that has a short duration of the activated state of the SCG, to a cell that has higher reference signal receiving power (RSRP) and/or reference signal receiving quality (RSRQ) measurement values but a heavier load compared to other neighboring cells, thereby helping the network side achieve better load balancing.

In other optional embodiments, the method further includes that: the terminal receives second configuration information transmitted by the network device. Herein the second configuration information includes at least one of:
A state of the PSCell or the SCG;
Duration information corresponding to the state of the PSCell or the SCG;
A state of the at least one SCell in the SCG, other than the PSCell;
Duration information corresponding to the state of the at least one SCell in the SCG, other than the PSCell; or
Whether the configuration of the network device allows the terminal to request the activation or deactivation of the SCG.

In the embodiments, in some embodiments, the network device (e.g., a base station) may configure the second configuration information for the terminal based on a duration of previous activation and/or deactivation of the SCG of the terminal, and whether the network element initiating the activation and/or deactivation of the SCG is a base station (MN or SN) or a terminal. The second configuration information includes, for example, the state of the PSCell or the SCG, the state of the at least one SCell in the SCG other than the PSCell, and duration information corresponding to each state, etc. For a terminal that has a longer duration of previous activation of the SCG of the terminal, the network device (e.g., a base station) may configure the activation of the PSCell and even other SCell(s) in the SCG, and corresponding duration information for the terminal (e.g., based on the pattern and duration of previous activation or deactivation of the SCG of the terminal) in a handover command or radio resource control (RRC) reconfiguration message during handover. Conversely, for a terminal that has a shorter duration of previous activation of the SCG, the network device (e.g., a base station) may configure the PSCell or the SCG to be in a deactivated state for the terminal in the handover command or RRC reconfiguration message during the handover.

In other embodiments, the network device (e.g., a base station) may further decide whether to allow the terminal to request the activation or deactivation of the SCG in the future based on information such as whether the network device previously allowed the terminal to request the activation or deactivation of the SCG, or a number and/or frequency of the terminal's requests for the activation or deactivation of the SCG. For example, if the terminal always requests the activation or deactivation of the SCG, but actual duration of the activated or deactivated state of the SCG of the terminal after the request is always very short, this indicates that the terminal's requests are not reasonable, and the network device may subsequently not configure the terminal to have this capability. Conversely, if actual duration of the activated or deactivated state of the SCG of the terminal after the terminal's request is not short, the network device configures the terminal to be capable of requesting the activation or deactivation of the SCG.

Based on the above embodiments, an embodiment of the disclosure further provides a communication method, which is applied to a network device. FIG. 2 is a second schematic flowchart of a communication method according to an embodiment of the disclosure. As shown in FIG. 2, the method includes the operation 201.

At operation 201, a network device receives first information related to activation or deactivation of a primary secondary cell (PSCell) or a secondary cell group (SCG) reported by a terminal, herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of the network device allows the terminal to request the activation or deactivation of the SCG.

Optionally, the duration information for the activation and/or deactivation of the PSCell or the SCG may specifically be a specific duration corresponding to the activated state and/or deactivated state, or it may also be a duration ratio corresponding to the activated state and/or deactivated state within a certain time range.

Optionally, the duration information corresponding to the state of the at least one SCell in the SCG, other than the PSCell may specifically be a specific duration of the state (activated state and/or deactivated state) of the at least one SCell in the SCG other than the PSCell, or it may also be a duration ratio corresponding to the activated state and/or deactivated state within a certain time range.

Optionally, the network element information for indicating the activation or deactivation of the SCG may specifically be a base station, such as an MN or an SN. In other embodiments, the network element information may also be a terminal.

In the embodiment, the network device receives the first information related to the activation or deactivation of the PSCell or the SCG reported by the terminal, which helps the network side know the dual connection situation of the terminal, thereby facilitating the optimization of the handover strategy and related configuration by the network side.

Optionally, the network device is one of: a network management device, a TCE, or a base station.

In some optional embodiments of the disclosure, the method further includes that: the network device transmits first configuration information to the terminal, herein the first configuration information is configured to configure or request the terminal to record or report the first information.

In some optional embodiments, before the network device receives the first information related to the activation or deactivation of the PSCell or the SCG reported by the terminal, the method further includes the following operations. The network device transmits a first request to the terminal, the first request is configured to request the first information. Alternatively, the network device receives second information transmitted by the terminal, the second information is configured to notify that the terminal has recorded the first information; and the network device transmits a second request to the terminal, the second request is configured to request the first information.

In the embodiments, the operation that the network device receives the first information reported by the terminal may specifically include three implementations. As a first implementation, the network device transmits the first request to the terminal, that is, the network side node requests the terminal to report the first information. After receiving the first request transmitted by the network device, the terminal transmits the first information to the network device. As a second implementation, the terminal may also actively report the first information to the network device. As a third implementation, after recording the first information, the terminal may first notify the network device that the first information has been recorded, that is, the network device receives the second information transmitted by the terminal; then, the network device requests the terminal to report the first information (that is, the network device transmits the second request to the terminal), and receives the first information transmitted by the terminal. Herein the network device may specifically be a network management device, a TCE, or a base station.

In some optional embodiments of the disclosure, the method further includes that: the network device optimizes a handover strategy of the terminal and/or a configuration related to the PSCell or the SCG based on the first information.

In the embodiments, the handover strategy may specifically be a related strategy for the terminal to perform a cell handover or a base station handover. The handover strategy may specifically include conditions for performing the cell handover or the base station handover, for example, under what conditions the terminal meets, the terminal switches to a cell or a base station that meets certain requirements. The configuration related to the PSCell or the SCG may specifically include configuring a state of the PSCell or the SCG (such as activation and/or deactivation), duration information of each state, an activated and/or deactivated state of at least one SCell in the SCG other than the PSCell, and duration information corresponding to the state of the at least one SCell in the SCG other than the PSCell, etc.

In some optional embodiments, the method further includes that: the network device transmits a first indication to the terminal based on the handover strategy, herein the first indication is configured to indicate the terminal to perform a base station handover or a cell handover. Herein for the terminal for which the duration information corresponding to the activated state of the SCG meets a first preset condition, the first indication is configured to indicate the terminal to switch to a base station or a cell that has a load less than a first threshold and supports dual connection; and/or for the terminal for which the duration information corresponding to the activated state of the SCG does not meet the first preset condition, the first indication is configured to indicate the terminal to switch to a cell in which a communication quality is higher than a second threshold.

In the embodiments, exemplarily, the network device (e.g., a base station) may switch a terminal that has a long duration of the activated state of the SCG, i.e., a terminal that always performs high-speed data transmission, to a relatively idle target base station that supports dual connection; and switch a terminal that has a short duration of the activated state of the SCG, to a cell that has higher RSRP and/or RSRQ measurement values but a heavier load compared to other neighboring cells, thereby helping the network side achieve better load balancing.

In other optional embodiments, the method further includes that: the network device transmits second configuration information to the terminal based on the configuration related to the PSCell or the SCG. Herein the second configuration information includes at least one of:
A state of the PSCell or the SCG;
Duration information corresponding to the state of the PSCell or the SCG;
A state of the at least one SCell in the SCG, other than the PSCell;
Duration information corresponding to the state of the at least one SCell in the SCG, other than the PSCell; or
Whether the configuration of the network device allows the terminal to request the activation or deactivation of the SCG.

In the embodiments, in some embodiments, the network device (e.g., a base station) may configure the second configuration information for the terminal based on a duration of previous activation and/or deactivation of the SCG of the terminal, and whether the network element initiating the activation and/or deactivation of the SCG is a base station (MN or SN) or a terminal. The second configuration information includes, for example, the state of the PSCell or the SCG, the state of the at least one SCell in the SCG other than the PSCell, and duration information corresponding to each state, etc. For a terminal that has a longer duration of previous activation of the SCG of the terminal, the network device (e.g., a base station) may configure the activation of the PSCell and even other SCell(s) in the SCG, and corresponding duration information for the terminal (e.g., based on the pattern and duration of previous activation or deactivation of the SCG of the terminal) in a handover command or RRC reconfiguration message during handover. Conversely, for a terminal that has a shorter duration of previous activation of the SCG, the network device (e.g., a base station) may configure the PSCell or the SCG to be in a deactivated state for the terminal in the handover command or RRC reconfiguration message during the handover.

In other embodiments, the network device (e.g., a base station) may further decide whether to allow the terminal to request the activation or deactivation of the SCG in the future based on information such as whether the network device previously allowed the terminal to request the activation or deactivation of the SCG, or a number and/or frequency of the terminal's requests for the activation or deactivation of the SCG. For example, if the terminal always requests the activation or deactivation of the SCG, but actual duration of the activated or deactivated state of the SCG of the terminal after the request is always very short, this indicates that the terminal's requests are not reasonable, and the network device may subsequently not configure the terminal to have this capability. Conversely, if actual duration of the activated or deactivated state of the SCG of the terminal after the terminal's request is not short, the network device configures the terminal to be capable of requesting the activation or deactivation of the SCG.

An embodiment of the disclosure further provides a communication method, which is applied to a first network device. The method includes that: a first network device transmits first information related to activation or deactivation of a primary secondary cell (PSCell) or a secondary cell group (SCG) of a terminal to a second network device, herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of a network device allows the terminal to request the activation or deactivation of the SCG.

In the embodiment, the first information may further be transmitted between network devices. For example, during the handover process, a source base station transmits the first information to a target base station, to help the target base station decide whether to configure the dual connection, the activation of the SCG, etc. for the terminal in the subsequent process. Exemplarily, both the first network device and the second network device may be access network devices, such as base stations.

In some optional embodiments, the operation that the first network device transmits the first information related to the activation or deactivation of the PSCell or the SCG of the terminal to the second network device includes that: the first network device transmits a handover request message to the second network device, herein the handover request message includes the first information.

In some optional embodiments, the first information may also be collected by the first network device (e.g., a base station) itself, without the need for the terminal to report the first information to the first network device. This is because both the activation and deactivation of the SCG are configured by the first network device (e.g., a base station), so the first network device (e.g., a base station) may know the first information.

Based on the above embodiments, an embodiment of the disclosure further provides a communication apparatus, which is applied to a terminal. FIG. 3 is a first schematic diagram of a composition structure of a communication apparatus according to an embodiment of the disclosure. As shown in FIG. 3, the apparatus includes a first communication unit 31, configured to report first information related to activation or deactivation of a primary secondary cell (PSCell) or a secondary cell group (SCG), herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of a network device allows the terminal to request the activation or deactivation of the SCG.

In some optional embodiments of the disclosure, the apparatus further includes a first processing unit 32, configured to record the first information.

In some optional embodiments of the disclosure, the apparatus further includes a first processing unit 32.

The first communication unit 31 is configured to receive first configuration information transmitted by the network device, herein the first configuration information is configured to configure or request the terminal to record or report the first information.

Alternatively, the first processing unit 32 is configured to record the first information according to a predefined protocol.

In some optional embodiments of the disclosure, the network device is one of: a network management device, a trace collection entity (TCE), or a base station.

In some optional embodiments of the disclosure, the first communication unit 31 is configured to receive a first request transmitted by the network device and transmit the first information to the network device based on the first request. Alternatively, the first communication unit 31 is configured to actively transmit the first information to the network device. Alternatively, the first communication unit 31 is configured to transmit second information to the network device, receive a second request transmitted by the network device, and transmit the first information to the network device based on the second request. The second information is configured to notify that the first information has been recorded.

In some optional embodiments of the disclosure, the first communication unit 31 is further configured to receive a first indication transmitted by the network device, herein the first indication is configured to indicate performing a base station handover or a cell handover. Herein for the terminal for which the duration information corresponding to the activated state of the SCG meets a first preset condition, the first indication is configured to indicate switching to a base station or a cell that has a load less than a first threshold and supports dual connection; and/or for the terminal for which the duration information corresponding to the activated state of the SCG does not meet the first preset condition, the first indication is configured to indicate switching to a cell in which a communication quality is higher than a second threshold.

In some optional embodiments of the disclosure, the first communication unit 31 is further configured to receive second configuration information transmitted by the network device. Herein the second configuration information includes at least one of:
A state of the PSCell or the SCG;
Duration information corresponding to the state of the PSCell or the SCG;
A state of the at least one SCell in the SCG, other than the PSCell;
Duration information corresponding to the state of the at least one SCell in the SCG, other than the PSCell; or
Whether the configuration of the network device allows the terminal to request the activation or deactivation of the SCG.

In the embodiments of the disclosure, the first processing unit 32 in the apparatus may be implemented by a central processing unit (CPU), a digital signal processor (DSP), a microcontroller unit (MCU) or a field-programmable gate array (FPGA) in practical applications. The first communication unit 31 in the apparatus may be implemented by a communication module (including a basic communication suite, an operating system, a communication module, a standardized interface and protocol, etc.) and transceiver antenna(s) in practical applications.

An embodiment of the disclosure further provides a communication apparatus, which is applied to a network device. FIG. 4 is a second schematic diagram of a composition structure of a communication apparatus according to an embodiment of the disclosure. As shown in FIG. 4, the apparatus includes a second communication unit 41, configured to receive first information related to activation or deactivation of a primary secondary cell (PSCell) or a secondary cell group (SCG) reported by a terminal, herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of the network device allows the terminal to request the activation or deactivation of the SCG.

In some optional embodiments of the disclosure, the network device is one of: a network management device, a TCE, or a base station.

In some optional embodiments of the disclosure, the second communication unit 41 is further configured to transmit first configuration information to the terminal, herein the first configuration information is configured to configure or request the terminal to record or report the first information.

In some optional embodiments of the disclosure, the second communication unit 41 is further configured to transmit, before receiving the first information related to the activation or deactivation of the PSCell or the SCG reported by the terminal, a first request to the terminal, the first request is configured to request the first information. Alternatively, the second communication unit 41 is further configured to receive, before receiving the first information related to the activation or deactivation of the PSCell or the SCG reported by the terminal, second information transmitted by the terminal, the second information is configured to notify that the terminal has recorded the first information; and the second communication unit 41 is further configured to transmit a second request to the terminal, the second request is configured to request the first information.

In some optional embodiments of the disclosure, the apparatus further includes a second processing unit 42, configured to optimize a handover strategy of the terminal and/or a configuration related to the PSCell or the SCG based on the first information.

In some optional embodiments of the disclosure, the second communication unit 41 is further configured to transmit a first indication to the terminal based on the handover strategy, herein the first indication is configured to indicate the terminal to perform a base station handover or a cell handover. Herein for the terminal for which the duration information corresponding to the activated state of the SCG meets a first preset condition, the first indication is configured to indicate the terminal to switch to a base station or a cell that has a load less than a first threshold and supports dual connection; and/or for the terminal for which the duration information corresponding to the activated state of the SCG does not meet the first preset condition, the first indication is configured to indicate the terminal to switch to a cell in which a communication quality is higher than a second threshold.

In some optional embodiments of the disclosure, the second communication unit 41 is further configured to transmit second configuration information to the terminal based on the configuration related to the PSCell or the SCG. Herein the second configuration information includes at least one of:
A state of the PSCell or the SCG;
Duration information corresponding to the state of the PSCell or the SCG;
A state of the at least one SCell in the SCG, other than the PSCell;
Duration information corresponding to the state of the at least one SCell in the SCG, other than the PSCell; or
Whether the configuration of the network device allows the terminal to request the activation or deactivation of the SCG.

In the embodiments of the disclosure, the second processing unit 42 in the apparatus may be implemented by a CPU, a DSP, an MCU, or an FPGA in practical applications. The second communication unit 41 in the apparatus may be implemented by a communication module (including a basic communication suite, an operating system, a communication module, a standardized interface and protocol, etc.) and transceiver antenna(s) in practical applications.

An embodiment of the disclosure further provides a communication apparatus, which is applied to a first network device. The apparatus includes a third communication unit, configured to transmit first information related to activation or deactivation of a primary secondary cell (PSCell) or a secondary cell group (SCG) of a terminal to a second network device, herein the first information includes at least one of:
A cell identity of the PSCell;
First indication information of whether the PSCell or the SCG is deactivated;
Second indication information of whether the PSCell or the SCG has ever been deactivated;
Duration information for the activation and/or deactivation of the PSCell or the SCG;
An activated and/or deactivated state of at least one secondary cell (SCell) in the SCG, other than the PSCell;
Duration information corresponding to the state of the at least one SCell in the SCG, other than the PSCell;
Network element information for indicating the activation or deactivation of the SCG; or
Whether a configuration of a network device allows the terminal to request the activation or deactivation of the SCG.

In some optional embodiments of the disclosure, the third communication unit is configured to transmit a handover request message to the second network device, herein the handover request message includes the first information.

In the embodiments of the disclosure, the third communication unit in the apparatus may be implemented by a communication module (including a basic communication suite, an operating system, a communication module, a standardized interface and protocol, etc.) and transceiver antenna(s) in practical applications.

It should be noted that, when the communication apparatus according to the above embodiments performs communication, the division into program modules is illustrated only as an example. In practical applications, the processing may be assigned to different program modules as needed, that is, an internal structure of the apparatus may be divided into different program modules to complete all or part of the processing described above. Furthermore, the communication apparatus according to the above embodiments belongs to a same concept as the communication method embodiments. The specific implementation processes of the apparatus are detailed in the method embodiments, which are not repeated herein.

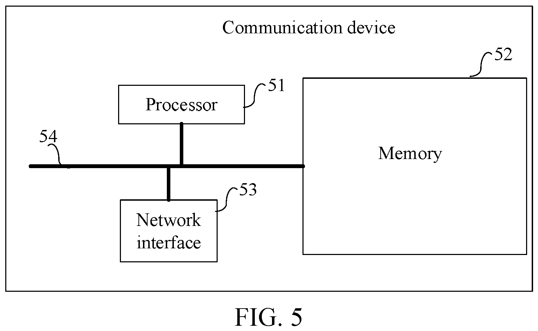

An embodiment of the disclosure further provides a communication device, which is a terminal or network device. FIG. 5 is a schematic diagram of a hardware composition structure of a communication device according to an embodiment of the disclosure. As shown in FIG. 5, the communication device includes a memory 52, a processor 51, and a computer program stored in the memory 52 and executable by the processor 51. The processor 51, when executing the computer program, implements the operations of the communication method applied to the terminal in the embodiments of the disclosure; or the processor 51, when executing the computer program, implements the operations of the communication method applied to the network device in the embodiments of the disclosure.

Optionally, the communication device further includes at least one network interface 53. Herein various components in the communication device are coupled together by a bus system 54. It may be understood that the bus system 54 is configured to implement connection communication between these components. The bus system 54 includes not only a data bus, but also a power bus, a control bus and a state signal bus. However, for the sake of clarity, the various buses are labeled as bus system 54 in FIG. 5.

It may be understood that the memory 52 may be a transitory memory or a non-transitory memory, and may include both the transitory memory and the non-transitory memory. Herein the non-transitory memory may be a read only memory (ROM), a programmable read-only memory (PROM), an erasable PROM (EPROM), an electrically EPROM (EEPROM), a ferromagnetic random access memory (FRAM), a flash memory, a magnetic surface memory, an optical disc, or a compact disc read-only memory (CD-ROM). The magnetic surface memory may be a magnetic disk memory or a magnetic tape memory. The transitory memory may be a random access memory (RAM), which serves as an external cache. By way of example but not limitation, many forms of RAM are available, such as static RAM (SRAM), synchronous SRAM (SSRAM), dynamic RAM (DRAM), synchronous DRAM (SDRAM), double data rate SDRAM (DDRSDRAM), enhanced SDRAM (ESDRAM), synclink DRAM (SLDRAM), and direct rambus RAM (DRRAM). The memory 52 described in the embodiments of the disclosure is intended to include, but is not limited to, these and any other suitable types of memory.

The methods disclosed in the above embodiments of the disclosure may be applied to the processor 51 or implemented by the processor 51. The processor 51 may be an integrated circuit chip with signal processing capabilities. In the implementation process, the operations of the above methods may be completed by an integrated logic circuit of hardware in the processor 51 or instructions in the form of software. The processor 51 described above may be a general-purpose processor, a DSP, or other programmable logic device, a discrete gate or transistor logic device, a discrete hardware component, etc. The processor 51 may implement or execute the methods, operations, and logical block diagrams disclosed in the embodiments of the disclosure. The general-purpose processor may be a microprocessor or any conventional processor, etc. The operations of the methods disclosed in combination with the embodiments of the disclosure may be directly embodied as being executed by a hardware decoding processor, or as being executed by a combination of hardware and software modules in a decoding processor. The software module may be located in a storage medium, which is located in the memory 52. The processor 51 reads information in the memory 52 and completes the operations of the aforementioned methods in combination with its hardware.

In an exemplary embodiment, the communication device may be implemented by one or more application specific integrated circuits (ASICs), DSPs, programmable logic devices (PLDs), complex programmable logic devices (CPLDs), FPGAs, general-purpose processors, controllers, MCUs, microprocessors, or other electronic components for performing the aforementioned methods.

In an exemplary embodiment, an embodiment of the disclosure further provides a computer-readable storage medium, such as the memory 52 including a computer program executable by the processor 51 of the communication device to complete the operations of the aforementioned methods. The computer-readable storage medium may be a memory such as a FRAM, a ROM, a PROM, an EPROM, an EEPROM, a flash memory, a magnetic surface memory, an optical disc, or a CD-ROM. The computer-readable storage medium may also be various devices including one or any combination of the above-mentioned memories.

The computer-readable storage medium according to the embodiment of the disclosure has stored thereon a computer program. The computer program, when executed by a processor, implements the operations of the communication method applied to the terminal in the embodiments of the disclosure; or the computer program, when executed by the processor, implements the operations of the communication method applied to the network device in the embodiments of the disclosure.

The methods disclosed in the several method embodiments provided by the disclosure may be arbitrarily combined without conflict to obtain new method embodiments.

The features disclosed in the several product embodiments provided by the disclosure may be arbitrarily combined without conflict to obtain new product embodiments.

The features disclosed in the several method or device embodiments provided by the disclosure may be arbitrarily combined without conflict to obtain new method or device embodiments.

In the several embodiments provided by the disclosure, it should be understood that the disclosed devices and methods may be implemented in other ways. The device embodiments described above are only illustrative. For example, the division of the units is merely a logical function division. In practical implementation, there may be other division manners, for example, multiple units or components may be combined or integrated into another system, or some features may be ignored or not executed. Furthermore, the coupling or direct coupling or communication connection between the shown or discussed components may be indirect coupling or communication connection between devices or units through some interfaces, and may be electrical, mechanical, or of other forms.

The units described above as separate units may or may not be physically separated, and the components displayed as units may or may not be physical units, that is, they may be located in one place or may be distributed across multiple network units. Some or all of the units may be selected according to actual needs to implement the purposes of the solutions in the embodiments.

Furthermore, all functional units in the embodiments of the disclosure may be integrated into one processing unit, or each unit may be separately used as one unit, or two or more units may be integrated into one unit. The above integrated units may be implemented in a form of hardware or in a form of hardware and software functional units.

It may be understood by those ordinary skilled in the art that all or part of the operations for implementing the above method embodiments may be completed through hardware related to program instructions. The aforementioned program may be stored in a computer-readable storage medium, and the program, when executed, performs the operations of the above method embodiments. The aforementioned storage medium includes various media capable of storing program codes, such as a portable storage device, a ROM, a RAM, a magnetic disk, or an optical disk.

Alternatively, if the above integrated units of the disclosure are implemented in a form of software function modules and sold or used as an independent product, they also may be stored in a computer-readable storage medium. Based on such an understanding, the technical solutions in essence or a part contributing to the related art in the embodiments of the disclosure may be embodied in a form of a software product, which is stored in a storage medium and includes several instructions to cause a computer device (which may be a personal computer, a server, or a network device, etc.) to perform all or part of the methods in the embodiments of the disclosure. The aforementioned storage medium includes various media capable of storing program codes, such as a portable storage device, a ROM, a RAM, a magnetic disk, or an optical disk.

The above is merely specific implementations of the disclosure, but the scope of protection of the disclosure is not limited thereto. Any skilled in the art may easily conceive of changes or replacements within the technical scope of the disclosure, which should be included within the scope of protection of the disclosure. Therefore, the scope of protection of the disclosure should be based on the scope of protection of the claims.

## Claims

1. A communication method, comprising:
reporting, by a terminal, first information related to activation or deactivation of a primary secondary cell (PSCell) or a secondary cell group (SCG), wherein the first information comprises at least one of:
a cell identity of the PSCell;
first indication information of whether the PSCell or the SCG is deactivated;
second indication information of whether the PSCell or the SCG has ever been deactivated;
duration information for the activation and/or deactivation of the PSCell or the SCG;
an activated and/or deactivated state of at least one secondary cell (SCell) in the SCG, other than the PSCell;
duration information corresponding to the state of the at least one SCell in the SCG, other than the PSCell;
network element information for indicating the activation or deactivation of the SCG; or
whether a configuration of a network device allows the terminal to request the activation or deactivation of the SCG.

2. The method of claim 1, further comprising:
recording, by the terminal, the first information.

3. The method of claim 1, further comprising:
receiving, by the terminal, first configuration information transmitted by the network device, wherein the first configuration information is configured to configure or request the terminal to record or report the first information; or
recording, by the terminal, the first information according to a predefined protocol.

4. The method of claim 3, wherein the network device is one of:
a network management device, a trace collection entity (TCE), or a base station.

5. The method of claim 1, wherein reporting, by the terminal, the first information related to the activation or deactivation of the PSCell or the SCG comprises:
receiving, by the terminal, a first request transmitted by the network device, and transmitting, by the terminal, the first information to the network device based on the first request; or
actively transmitting, by the terminal, the first information to the network device; or
transmitting, by the terminal, second information to the network device, receiving a second request transmitted by the network device, and transmitting the first information to the network device based on the second request, wherein the second information is configured to notify that the first information has been recorded.

6. The method of claim 1, further comprising:
receiving, by the terminal, a first indication transmitted by the network device, wherein the first indication is configured to indicate the terminal to perform a base station handover or a cell handover;
wherein for the terminal for which the duration information corresponding to the activated state of the SCG meets a first preset condition, the first indication is configured to indicate the terminal to switch to a base station or a cell that has a load less than a first threshold and supports dual connection; and/or
for the terminal for which the duration information corresponding to the activated state of the SCG does not meet the first preset condition, the first indication is configured to indicate the terminal to switch to a cell in which a communication quality is higher than a second threshold.

7. The method of claim 1, further comprising:
receiving, by the terminal, second configuration information transmitted by the network device; wherein the second configuration information comprises at least one of:
a state of the PSCell or the SCG;
duration information corresponding to the state of the PSCell or the SCG;
the state of the at least one SCell in the SCG, other than the PSCell;
duration information corresponding to the state of the at least one SCell in the SCG, other than the PSCell; or
information of whether the configuration of the network device allows the terminal to request the activation or deactivation of the SCG.

8. A communication method, comprising:
receiving, by a network device, first information related to activation or deactivation of a primary secondary cell (PSCell) or a secondary cell group (SCG) reported by a terminal, wherein the first information comprises at least one of:
a cell identity of the PSCell;
first indication information of whether the PSCell or the SCG is deactivated;
second indication information of whether the PSCell or the SCG has ever been deactivated;
duration information for the activation and/or deactivation of the PSCell or the SCG;
an activated and/or deactivated state of at least one secondary cell (SCell) in the SCG, other than the PSCell;
duration information corresponding to the state of the at least one SCell in the SCG, other than the PSCell;
network element information for indicating the activation or deactivation of the SCG; or
whether a configuration of the network device allows the terminal to request the activation or deactivation of the SCG.

9. The method of claim 8, wherein the network device is one of:
a network management device, a trace collection entity (TCE), or a base station.

10. The method of claim 8, further comprising:
transmitting, by the network device, first configuration information to the terminal, wherein the first configuration information is configured to configure or request the terminal to record or report the first information.

11. The method of claim 8, wherein before receiving, by the network device, the first information related to the activation or deactivation of the PSCell or the SCG reported by the terminal, the method further comprises:
transmitting, by the network device, a first request to the terminal, the first request being configured to request the first information; or
receiving, by the network device, second information transmitted by the terminal, the second information being configured to notify that the terminal has recorded the first information; and transmitting a second request to the terminal, the second request being configured to request the first information.

12. The method of claim 8, further comprising:
optimizing, by the network device, a handover strategy of the terminal and/or a configuration related to the PSCell or the SCG based on the first information.

13. The method of claim 12, further comprising:
transmitting, by the network device, a first indication to the terminal based on the handover strategy, wherein the first indication is configured to indicate the terminal to perform a base station handover or a cell handover;
wherein for the terminal for which the duration information corresponding to the activated state of the SCG meets a first preset condition, the first indication is configured to indicate the terminal to switch to a base station or a cell that has a load less than a first threshold and supports dual connection; and/or
for the terminal for which the duration information corresponding to the activated state of the SCG does not meet the first preset condition, the first indication is configured to indicate the terminal to switch to a cell in which a communication quality is higher than a second threshold.

14. The method of claim 12, further comprising:
transmitting, by the network device, second configuration information to the terminal based on the configuration related to the PSCell or the SCG; wherein the second configuration information comprises at least one of:
a state of the PSCell or the SCG;
duration information corresponding to the state of the PSCell or the SCG;
the state of the at least one SCell in the SCG, other than the PSCell;
duration information corresponding to the state of the at least one SCell in the SCG, other than the PSCell; or
whether the configuration of the network device allows the terminal to request the activation or deactivation of the SCG.

15. A communication method, comprising:
transmitting, by a first network device, first information related to activation or deactivation of a primary secondary cell (PSCell) or a secondary cell group (SCG) of a terminal to a second network device, wherein the first information comprises at least one of:
a cell identity of the PSCell;
first indication information of whether the PSCell or the SCG is deactivated;
second indication information of whether the PSCell or the SCG has ever been deactivated;
duration information for the activation and/or deactivation of the PSCell or the SCG;
an activated and/or deactivated state of at least one secondary cell (SCell) in the SCG, other than the PSCell;
duration information corresponding to the state of the at least one SCell in the SCG, other than the PSCell;
network element information for indicating the activation or deactivation of the SCG; or
whether a configuration of a network device allows the terminal to request the activation or deactivation of the SCG.

16. The method of claim 15, wherein transmitting, by the first network device, the first information related to the activation or deactivation of the PSCell or the SCG of the terminal to the second network device comprises:
transmitting, by the first network device, a handover request message to the second network device, wherein the handover request message comprises the first information.

17. A communication apparatus, applied in a terminal, wherein the apparatus comprises a first communication unit configured to report first information related to activation or deactivation of a primary secondary cell (PSCell) or a secondary cell group (SCG), and the first information comprises at least one of:
a cell identity of the PSCell;
first indication information of whether the PSCell or the SCG is deactivated;
second indication information of whether the PSCell or the SCG has ever been deactivated;
duration information for the activation and/or deactivation of the PSCell or the SCG;
an activated and/or deactivated state of at least one secondary cell (SCell) in the SCG, other than the PSCell;
duration information corresponding to the state of the at least one SCell in the SCG, other than the PSCell;
network element information for indicating the activation or deactivation of the SCG; or
whether a configuration of a network device allows the terminal to request the activation or deactivation of the SCG.

18. A communication apparatus, applied in a network device, wherein the apparatus comprises a second communication unit configured to receive first information related to activation or deactivation of a primary secondary cell (PSCell) or a secondary cell group (SCG) reported by a terminal, and the first information comprises at least one of:
a cell identity of the PSCell;
first indication information of whether the PSCell or the SCG is deactivated;
second indication information of whether the PSCell or the SCG has ever been deactivated;
duration information for the activation and/or deactivation of the PSCell or the SCG;
an activated and/or deactivated state of at least one secondary cell (SCell) in the SCG, other than the PSCell;
duration information corresponding to the state of the at least one SCell in the SCG, other than the PSCell;
network element information for indicating the activation or deactivation of the SCG; or
whether a configuration of the network device allows the terminal to request the activation or deactivation of the SCG.

19. A communication apparatus, comprising a third communication unit, configured to transmit first information related to activation or deactivation of a primary secondary cell (PSCell) or a secondary cell group (SCG) of a terminal to a second network device, wherein the first information comprises at least one of:
a cell identity of the PSCell;
first indication information of whether the PSCell or the SCG is deactivated;
second indication information of whether the PSCell or the SCG has ever been deactivated;
duration information for the activation and/or deactivation of the PSCell or the SCG;
an activated and/or deactivated state of at least one secondary cell (SCell) in the SCG, other than the PSCell;
duration information corresponding to the state of the at least one SCell in the SCG, other than the PSCell;
network element information for indicating the activation or deactivation of the SCG; or
whether a configuration of a network device allows the terminal to request the activation or deactivation of the SCG.

20. A computer-readable storage medium, having stored thereon a computer program, and the computer program, when executed by a processor, implementing the operations of the method of any one of claims 1 to 7; or
the computer program, when executed by the processor, implementing the operations of the method of any one of claims 8 to 14; or
the computer program, when executed by the processor, implementing the operations of the method of claim 15 or 16.

21. A communication device, comprising a memory, a processor, and a computer program stored in the memory and executable by the processor, wherein the processor, when executing the computer program, implements the operations of the method of any one of claims 1 to 7; or
the processor, when executing the computer program, implements the operations of the method of any one of claims 8 to 14; or
the processor, when executing the computer program, implements the operations of the method of claim 15 or 16.
